# EUROPEAN PATENT APPLICATION

(11) **EP 4 597 929 A1**
(43) Date of publication of application: **06.08.2025**
(21) Application number: 24154638.1
(22) Date of filing: 30.01.2024
(51) Int. Cl.: H04L 9/40, G06N 5/01, G06N 7/01, G06N 20/20, G06F 21/55

(54) **IDENTIFICATION OF NETWORK EVENTS REPRESENTING A NETWORK SECURITY THREAT**

(71) Applicant: Vocalink Limited, London EC4R 3AB (GB)
(72) Inventor: CHESTER, Graham David, London, EC4R 3AB (GB); PATEL, Prina Rajendra Kumar, London, EC4R 3AB (GB); IX, Sebastian, London, EC4R 3AB (GB)
(74) Representative: Gill Jennings & Every LLP

(57) **Abstract**

A computer-implemented method is provided for training a machine learning model to identify one or more network events associated with a network and representing a network security threat. The method comprises: a) obtaining a first dataset comprising data representative of a plurality of network events in a first network; b) obtaining a second dataset comprising data representative of a plurality of network events in a second network; c) performing covariate shift analysis on the first dataset and the second dataset to identify and classify a plurality of differences between the first dataset and the second dataset; d) performing domain adaptation on the first dataset, based on a classified difference, to generate a training dataset; e) training a machine learning model using the training dataset to produce a trained threat detection model. In this way,

## Description

### FIELD OF THE INVENTION

This invention relates to a computer-implemented method for training a machine learning model to identify one or more network events associated with a network and representing a network security threat, a method of identifying one or more network events associated with a network and representing a network security threat, and apparatus for performing said methods.

### BACKGROUND

Computer networks often experience a large volume of network events. For example, a payment network enabling transfer of electronic funds can experience hundreds of thousands, millions or even tens of millions of network events per day in the form of individual transactions that each comprise electronic message(s) transmitted over the network. On average, something of the order of one, ten, or one hundred network events per day are associated with a network security threat. It is very difficult to effectively police such a large volume of network events to accurately pick out the small fraction that have a high probability of being associated with a network security threat for further investigation.

It is important to make the threat detection process as accurate as possible, as each network event that is flagged as possibly being associated with a security threat that turns out to be a false positive constitutes a waste of resources such as processor cycles, power and memory. This is in addition to the time and resources required to perform a remedial action in response to the flagged network event, and the subsequent reverting of the remedial action once it has been identified that the event was a false positive. Equally, each network event that is in fact associated with a security threat that is missed constitutes an undetected security breach, which is clearly undesirable. Machine learning models such as, but not limited to, artificial neural networks (ANNs) may be trained to help identify network events that are predicted to be associated with a network security threat. However, the effectiveness of the model is highly dependent on the data used to train it and networks can vary dramatically across different institutions. This can lead to issues when applying a trained threat detection model to a new network which is very different to the network originally used to train the model.

What is needed is a way of training a machine learning model, using data corresponding to a first network, to accurately identify network threats in a second network.

### SUMMARY OF INVENTION

In a first aspect, the invention provides a computer-implemented method for training a machine learning model to identify one or more network events associated with a network and representing a network security threat, the method comprising: a) obtaining a first dataset comprising data representative of a plurality of network events in a first network; b) obtaining a second dataset comprising data representative of a plurality of network events in a second network; c) performing covariate shift analysis on the first dataset and the second dataset to identify and classify a plurality of differences between the first dataset and the second dataset; d) performing domain adaptation on the first dataset, based on a classified difference, to generate a training dataset; e) training a machine learning model using the training dataset to produce a trained threat detection model.

A dataset comprises a plurality of records, with each record corresponding to a particular network event and containing relevant details regarding the particular network event. For example, records may be represented as rows in the dataset and features as columns. As the first and second networks are different, the first dataset will be different to the second dataset. When the second dataset is not of a sufficient size and/or sufficiently labelled to train a threat detection model to identify threats in the second network, a threat detection model trained using first dataset could instead be used. However, due to the differences between the first dataset and second dataset, this means that a threat detection model trained using the first dataset cannot be used as effectively to detect network events representing security threats in the second network. Advantageously, it has now been found that covariate shift analysis and domain adaptation can be used to generate an optimised training dataset from the first dataset, where the training dataset has a feature distribution more closely aligned to that of the second dataset. That is, information content in the first dataset which is specific to the first dataset is minimised to generate the training dataset which is more generally applicable to other networks (such as the second network). This means a threat detection model trained using the training dataset will have significantly higher performance when detecting threats in the second network than if the model was trained using the unaltered first dataset.

Covariate shift analysis provides an indication of the overall alignment between the first and second datasets, identifying and classifying features and rows (i.e. records corresponding to network events) according to their degree of difference. This enables quick identification of misalignments and provides options to resolve them with domain adaptation.

A threat detection model trained using the training dataset may also have higher performance when detecting threats in networks other than the first and second networks, relative to a model trained on the first dataset, as the training dataset is more general than the first dataset.

Classifying a difference between the first dataset and the second dataset may comprise classifying a degree of difference. The degree of difference refers to features which are the same or similar in both datasets but where the values or the distribution of those features (e.g. data in a record corresponding to a network event) varies between the datasets, and the extent of that variation.

Optionally, performing covariate shift analysis comprises: concatenating the first dataset and the second dataset to generate a concatenated dataset; applying a trained covariate shift model to the concatenated dataset, wherein the trained covariate shift model is trained to determine whether a network event in the concatenated dataset is from the first dataset or the second dataset.

Preferably, performing covariate shift analysis comprises: concatenating the first dataset and the second dataset to generate a concatenated dataset; using a covariate shift classifier, performing k-fold cross-validation on the concatenated dataset and scoring one or more of: the accuracy of the covariate shift classifier, the AUROC of the covariate shift classifier, at least one record of the concatenated dataset, or at least one feature of the concatenated dataset.

In this way, the covariate shift classifier attempts to distinguish between the data of the first dataset and the data of the second dataset by determining whether a record in the concatenated dataset is from the first dataset or the second dataset. K-fold cross-validation may be used to: score the accuracy of classifier as a whole, determine the AUROC of the classifier, score individual features, and/or to score individual records. Scoring refers to the degree or extent of difference between the datasets. If the covariate shift classifier has a high accuracy or AUROC this means it is finding it easy to determine whether a network event is from the first dataset or the second dataset, and therefore the two datasets are very different and a threat detection model trained on the first dataset will not have high performance on the second dataset. Scoring records refers to scoring or classifying how different the record is relative to the other dataset it is not from. Scoring features refers to scoring or classifying the importance of the feature for determining whether a record is from the first dataset or the second dataset.

This implementation enables quick identification of misalignments between the first and second datasets. 5-fold cross-validation and 10-fold cross-validation have been found to be particularly effective.

The covariate shift classifier may comprise any suitable machine learning algorithm capable of performing k-fold cross-validation on the concatenated dataset. For example, the covariate shift classifier may comprise a gradient boosted decision classifier as this has been found to be particularly effective.

Performing domain adaptation may comprise one or more of the following: removing at least one record of the first dataset; removing at least one feature of the first dataset; or applying a mathematical transformation to at least one feature of the first dataset.

Typically, removing a feature or record is performed when the feature or network event in the first dataset is classified as being very different to the second dataset and so causing significant misalignment between the first and second datasets. Larger quantities of training data are typically preferred when training a machine learning model and so, where the classified difference is less substantial, a mathematical transformation, such as a scaling factor, log transform, Box-Cox transformation, or weighting may be applied to the feature or record to account for the difference and more closely align the datasets without reducing the training data.

Optionally, performing domain adaptation is based on the classified difference and an importance of the classified difference for threat detection.

Different features and record in the first dataset have different degrees of importance when training a machine learning model to effectively identify network security threats. That is, some features and records may be adjusted, for example by applying a mathematical transformation or being removed from the dataset, in the first dataset to generate the training dataset without substantially reducing the effectiveness of a threat detection model trained using that training data. Such features and records can be readily adjusted to more closely align the training dataset with the second dataset and train a threat detection machine learning model which is effective when detecting threats with the second network. However, other features and records may be particularly important for effective threat detection, and the adjustment of these during domain adaptation may reduce the effectiveness of the resulting trained threat detection model, even if the training dataset is more closely aligned with the second dataset. Therefore, basing the domain adaptation on the classified difference and the importance of the classified difference for threat detection increases the effectiveness of the resulting trained threat detection model.

Optionally, each network event comprises at least one electronic message transmitted over the network.

Optionally, the network is a payment network and the one or more network events are one or more transactions carried out over the payment network.

Optionally, the network security threat is the unauthorised modification of routing information within the payment network.

Optionally, the network is a network of medical records and the one or more network events are medical records for at least one user. For example, the medical records may comprise the user's name, contact information, date of birth, identity of health insurer and the user's health insurance identification number, among other items typically sought or required during patient check-in to a hospital.

Optionally, the threat detection model comprises at least one of: an artificial neural network (ANN), a gradient boosted decision tree, a random forest, a support-vector machine learning model, or deep learning neural networks.

Optionally, the method may further comprise: obtaining a test dataset comprising data representative of a plurality of network events in a test network; and classifying at least one network event within the test network as representing a security threat using the trained threat detection model.

Preferably, the test dataset comprises the second dataset or a third dataset comprising data representative of a plurality of network events in the second network.

As the trained threat detection model was trained using training data which is more closely aligned with the second dataset, the model will have higher performance when detecting threats in the second network. These high-performance models are created quickly and at relatively low resource cost due in part to the use of covariate shift analysis and domain adaptation based on the classified differences.

In a second aspect, the invention provides a method for identifying one or more network events associated with a network and representing a network security threat, the method comprising: obtaining a test dataset comprising data representative of a plurality of network events in a test network; classifying at least one network event within the test network as representing a security threat using a trained threat detection model, wherein the trained threat detection model was trained using the method of the first aspect.

Optionally, the methods of the first aspect and the second aspect may further comprise performing a remedial action responsive to the classifying at least one event as representing a network security threat, the remedial action to at least partially mitigate the network security threat.

In this way, the claimed method provides effective identification and resolution of a network security threat in a network, without requiring a machine learning model to be trained on a dataset directly representative of that network.

In a third aspect, the invention provides a non-transitory computer-readable storage medium storing instructions thereon which, when executed by one or more processors, cause the one or more processors to perform the method of the first aspect of the second aspect.

In a fourth aspect, the invention provides a data processing device comprising one or more processors and the non-transitory computer-readable storage medium of the third aspect.

### BRIEF DESCRIPTION OF DRAWINGS

Examples of the present invention are described below, by way of example only, with reference to the accompanying drawings, in which:
Fig. 1 illustrates in schematic form a network system of a type that generates network events suitable for analysis by the present invention;
Fig. 2 illustrates in schematic form a system that is suitable for processing a network log to identify network events associated with a security threat, according to an example;
Fig. 3 illustrates in schematic form a system that is suitable for training a machine learning model for use by a log processor to identify network events that are potentially associated with a security threat, according to an example;
Fig. 4 is a flowchart illustrating a method for training a machine learning model [to identify one or more network events associated with a network and representing a network security threat, according to an example;
Fig. 5 is a flowchart illustrating a method for using a training machine learning model to identify network events that are likely to be associated with security threats, according to an example;
Fig. 6 shows in schematic form a data processing device that is suitable for performing the functions of any one or more data processing devices within the system shown in Fig. 1.

### DETAILED DESCRIPTION

As used herein, the terms listed below have the following meanings:
A 'network event' is any discrete operation that occurs over a network. An electronic message authorising transfer of funds from a source account to a destination account is an example of a network event. Typically, network events are made up of one or more electronic messages communicated over the network.

A 'security threat' is any modification to the operation of the network that is made against the interests of the network operator or other stakeholder (e.g. a user of the network). Such a modification is usually made without the knowledge of the network operator and without the permission of the network operator. An example of a security threat in the context of a financial network is a redirection, where an electronic message specifying a false target account is transmitted over the network to cause movement of funds to an inappropriate target account in an attempt to commit fraud.

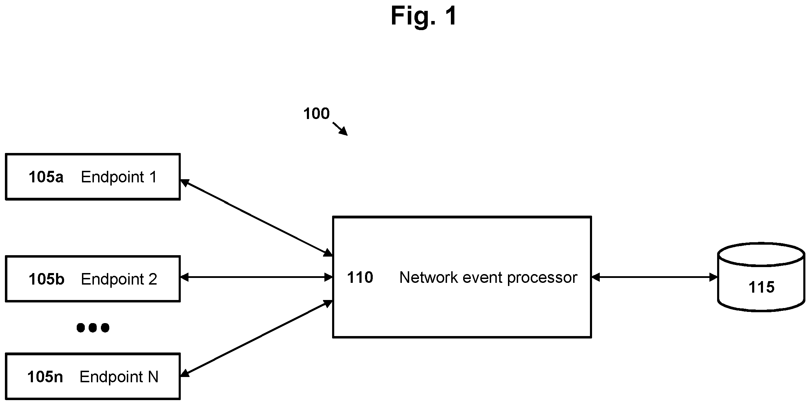

Fig. 1 illustrates in schematic form a network system 100 of a type that generates network events suitable for analysis by the present invention.

System 100 comprises one or more endpoints 105a, 105b, ... , 105n that are communicatively coupled to a network event processor 110. Network event processor 110 is communicatively coupled to a storage medium 115 that stores a network event log. The storage medium can be any medium capable of storing digital data that is known in the art, e.g. a hard disk drive / solid state drive that may be part of a data centre storage area network.

Each endpoint comprises an electronic device capable of generating electronic messages that form part or all of a network event. A network event can be defined as more than one message; for example, a network event can be a request to transfer funds and a corresponding confirmation that funds have been transferred.

Such electronic messages are transmitted from respective ones of the endpoints 105a, 105b, ..., 105n to network event processor 110 for processing. Network event processor 110 is an electronic device such as a server of a payment network that is configured to process electronic messages that form all or part of network events. In processing the electronic messages, network event processor 110 updates the network log stored on storage medium 115, e.g. by creating new records in the network log or editing existing records in the network log.

The network log contains a plurality of records, each record corresponding to a particular network event and containing pertinent details regarding the particular network event. These details can include, for example, a parameter associated with an electronic message such as any combination of a timestamp, an originating network address, a destination network address, an originating device identifier (e.g. MAC address), a destination device identifier (e.g. MAC address), network path information (e.g. a list of routers and/or switches the message has encountered), a message descriptor, an originating party identified and a destination party identifier. The message details can alternatively or additionally include information relating to a payload of the message, e.g. a value representing an amount of funds, a string (e.g. alphanumeric string) specifying a message source and/or destination, and the like. It will be appreciated by a skilled person having the benefit of the present disclosure that any information considered useful for the detection of security threats can be stored in the network event log.

Records in the network log can additionally or alternatively include calculated parameters relating to a network event. Examples include: a time taken to process a particular electronic message or set of electronic messages, a time taken for an electronic message to transit across all or part of the network, a path taken by the electronic message through the network, and the like. Such parameters may be calculated by network event processor 110.

Network system 100 can be a financial network configured to enable transfer of funds in an electronic manner. Each endpoint can be an electronic device configured to participate in an electronic payment, such as for example an electronic device with a banking application installed (e.g. a mobile phone with a banking 'app'). Each endpoint device can itself be a sub-system, such as the combination of a physical or virtual payment card and a point of sale terminal.

The network log can be realised by any machine-interpretable format suitable for storing records. Examples include: a CSV file, a text file delimited in some manner, an xml file, and the like.

It will be appreciated that operation of system 100 for some time, e.g. one hour, one day, one week, one month, one year, etc. will result in a network log containing a plurality of records each relating to a respective plurality of network events. For example, in the case of a payment network, network log may contain hundreds of thousands, millions or even tens of millions of records after operation for one day. Of these network events, only a very small percentage, e.g. 0.1% to 0.0000001 %, may be associated with a security threat. The following description illustrates how the invention may be applied to such a problem to accurately identify this small percentage of network events in a computationally efficient manner.

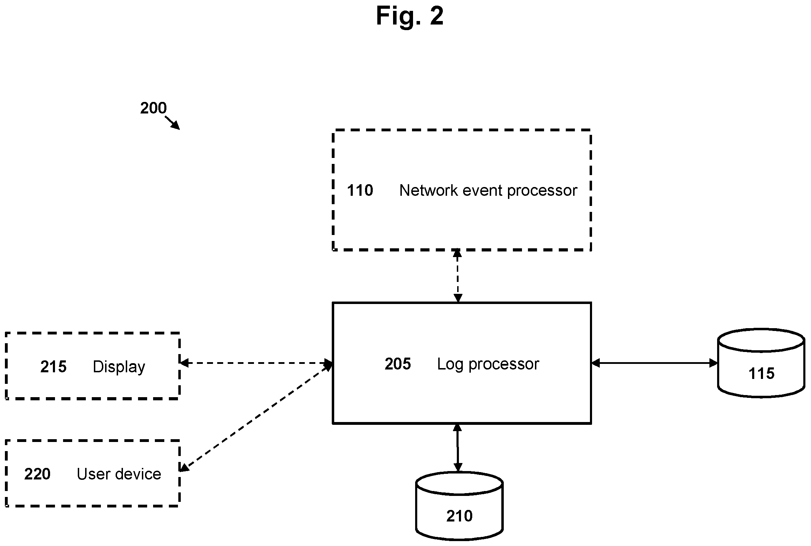

Fig. 2 illustrates in schematic form a system 200 suitable for processing the network log to identify network events associated with a security threat, according to an example. Dashed lines in Fig. 2 indicate optional features, which may be present in isolation of one another or in any combination.

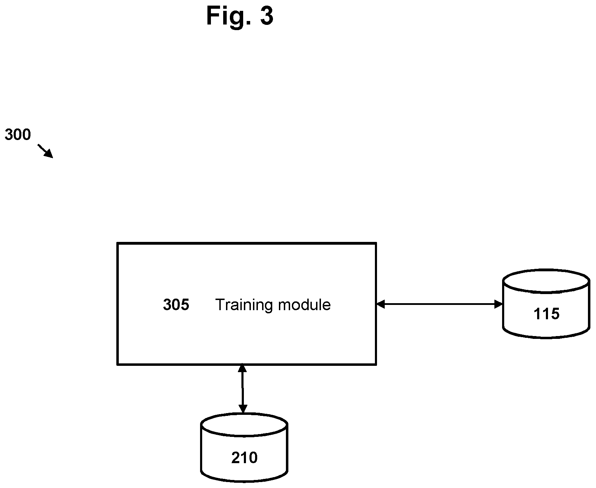

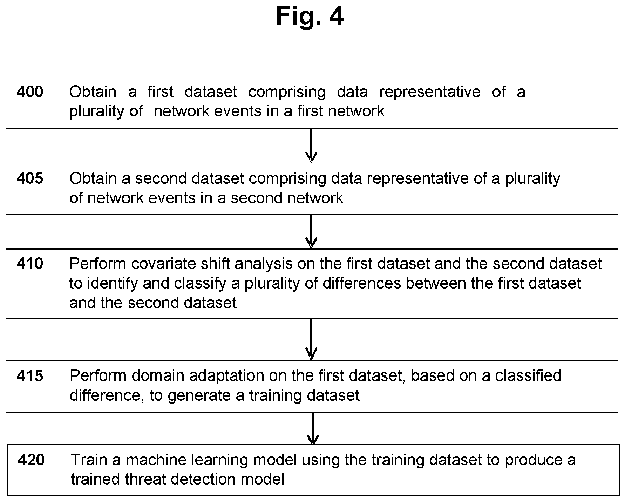

System 200 includes a log processor 205 that is communicatively coupled to storage medium 115. Log processor 205 is configured to retrieve a network event log from storage medium 115 and to process the network event log in accordance with a trained machine learning model stored in storage medium 210 so as to identify one or more network events that are predicted to be associated with a network security threat. While two distinct storage media are shown in Fig. 2, it will be appreciated that this is not essential to the invention and that a single storage medium can instead be used to store both the network event log and the trained machine learning model. The machine learning model can be trained in the manner described later in connection with Figs. 3 and 4.

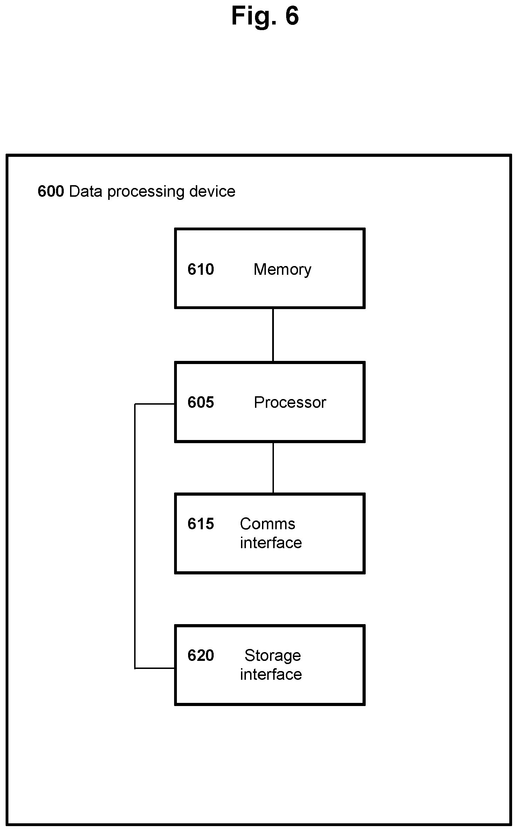

Log processor 205 can take the form of any data processing device, e.g. data processing device 600 of Fig. 6. A practical realisation of log processor 205 may take the form of a cluster of processors, which cluster may be scalable to add or reduce the total processing resource available commensurate with the number of entries in the network event log. The cluster may be Cloud-based.

Log processor 205 may function to provide a platform enabling authorised users to access security results produced by log processor 205, and particularly to access a threat report flagging up one or more network events as suspected to be associated with a security threat. The report may include a confidence score associated with each of the report's constituent network events, which confidence score indicates a level of confidence that each listed network event relates to a security threat. The platform may be a web-based platform enabling authorised users to operate a user device 220 (e.g. a computer, laptop, mobile telephone, tablet computer, etc.) to access log processor 205 over the internet, a wide area network or local area network, so as to view the threat report.

The threat report can take any form suitable for effectively conveying security threat information to a user, involving e.g. one or more graphs, charts, tables, trends, etc. One particular format may include a table having network events (e.g. a message timestamp, message source, message destination, message content, message descriptor, etc.) in a first column and a confidence score that the network event is associated with a security threat in a second column. The confidence score may expressed as a percentage, for example. Another particular format may be a computer-readable file, e.g. a text file or spreadsheet, containing a list of suspicious transactions. Other suitable forms for the threat report will be apparent to a person skilled in the art having the benefit of the present disclosure.

Log processor 205 may be communicatively coupled to a display 215 to enable an output, e.g. the report discussed in the immediately preceding paragraph, to be reviewed directly rather than via a user device.

Log processor 205 may be communicatively coupled to network event processor 110. Log processor 205 may be configured to transmit a threat identification message to network event processor 110, which threat identification message contains details of one or more network events that have been identified by log processor 205 as relating to one or more security threats.

Network event processor 110 may be configured to take remedial action upon receipt of a threat identification message, which remedial action may include any one or more of: alerting a network administrator to the receipt of the threat identification message such that the network administration is aware that the network is experiencing a security breach; quarantining a network component or components associated with the network event(s) identified in the threat identification message; recording details of network component or components associated with the network event(s) identified in the threat identification message in a blacklist so as to prevent such component(s) from participating in the network; suspending use of a source network address and/or a destination network address associated with the threat identification message, perhaps by adding the address(es) to a blacklist; and/or transmitting details of a network component or components associated with the network event(s) identified in the threat identification message to a data processing device of a law enforcement agency.

In each case the network component or components may comprise one or more of the endpoint devices. The blacklist can include any parameter that uniquely identifies the endpoint device, e.g. MAC address, and/or the message sender or recipient, e.g. bank account number. Network event processor 110 may be configured to review the blacklist before processing an electronic message, and to reject processing of a message that originated from and/or is destined for an endpoint device that is on the blacklist.

Log processor 205 may be configured to only transmit a threat identification message in the case where the network event(s) are considered to be associated with a security threat with a confidence level that exceeds a threshold confidence level, e.g. 85%, 90%, 95%, 99% confidence. In this way, the examples described in the following can operate to improve network security in an efficient and computationally resource-light manner.

Fig. 3 illustrates in schematic form a system 300 suitable for training a machine learning model for use by log processor 205 to identify network events that are potentially associated with a security threat, according to an example.

System 300 includes a training module 305 that is coupled to storage medium 115 and also to storage medium 210. Training module 305 is configured to extract data from the network event log stored by storage medium 115 and to use this data to train a machine learning model so as to produce a trained machine learning model. The training process is described in further detail in connection with Fig. 4. Once a model has been trained, it is stored in storage medium 210 for use by log processor 205 in the detection of network events that are likely to be associated with network security threats.

The machine learning model can be any type of machine learning model known to the skilled person. In the case where the network is a payment network and the network events are transactions, particular benefit may be obtained by using an ANN, a gradient boosted decision tree, a random forest, or a support-vector machine learning model.

Fig. 4 sets out a method for training a machine learning model according to an example. One or more steps of this method can be performed by training module 305.

In step 400, a first dataset is obtained. The first dataset comprises data representative of a plurality of network events in a first network. This first dataset may be the network event log as stored in storage medium 115, or it may be a dataset derived from the network event log, e.g. by pre-processing the network event log in some manner. The first dataset may be referred to as being representative of a population of network events.

In step 405, a second dataset is obtained. The second dataset comprises data of a plurality of network events in a second network. The second network is different to the first network. This second dataset may be a second network event log as stored in storage medium 115 or a different storage medium, or it may be a dataset derived from the second network event log, e.g. by pre-processing the second network event log in some manner. Similarly to the first dataset, the second dataset may be referred to as being representative of a population of network events.

In step 410, covariate shift analysis is performed on the first dataset and the second dataset. The analysis identifies and classifies a plurality of differences between the first dataset and the second dataset.

Covariate shift analysis is a technique used in machine learning to identify and address the issue of differences in the distribution of input variables between training and testing data. It will be appreciated that various techniques may be used to perform the covariate shift analysis. Identifying a difference refers to determining whether an aspect of the first dataset, such as a record or feature, is different to the second dataset. Classifying the difference refers to determining how the aspect is different; for example the degree of difference when the aspect is present in both datasets but the values (or the distribution of values) corresponding to the aspect vary between datasets. That is, classifying the degree of difference defines the extent of this variation.

In a specific example, the first dataset and the second dataset are concatenated to generate a concatenated dataset. A covariate shift classifier is trained to distinguish between training data from one network, e.g. the first dataset corresponding to the first network, and blind test data from another network, e.g. the second dataset corresponding to the second network. The trained covariate shift classifier may be applied to the concatenated dataset to identify whether a record (corresponding to a network event) in the concatenated dataset was originally from the first dataset or the second dataset.

For example, there may be a target variable of 1 for records from the blind test dataset and 0 for records from the training dataset. The trained covariate shift classifier may use k-fold cross-validation (e.g. 5-fold or 10-fold) to score all records in the concatenated dataset. Records from the first dataset which score very low are very different from those present in the second dataset, meaning they are distributed very differently and using these records without adjustment when training a threat detection model will not produce a model which is effective when applied to the second dataset. The covariate shift classifier may also score features in the first dataset for their difference to features in the second dataset; features which are important for the classifier to correctly identify whether a record in the concatenated dataset was from the first or second dataset will also lead to a less effective model being trained if these features are used without adjustment. The AUROC (Area under the ROC (receiver operating characteristic) Curve) and accuracy of the covariate shift classifier may also be scored. A high (e.g. over 90%) AUROC or accuracy indicates that the covariate shift classifier is easily determining whether a row is from the first dataset or the second test dataset and therefore a threat detection model trained using the first dataset will not perform well on the second dataset.

In step 415, domain adaptation is performed on the first dataset based on a classified difference. The domain adaptation changes the first dataset to generate a training dataset. The classified difference may be a single difference such as an individual record or feature of the first dataset, or multiple classified differences such as multiple records and/or features of the first dataset. As the domain adaptation is based on one or more classified differences, the training dataset is aligned closer to the second dataset than the first dataset was and may be used to train a threat detection machine learning model which has higher performance when applied to a dataset representing network events in the second network. When performing domain adaptation, it is advantageous to also account for the importance of the classified difference for threat detection to ensure the performance of the trained threat detection model is as high as possible. The importance of the features or records may already be known or may be obtained by evaluating a threat detection model trained using the first dataset, for example by performing k-fold cross-validation on a threat detection model using the first dataset.

Domain adaptation may take different forms depending on the classified difference. Features may be removed from the first dataset when the covariate shift analysis has found the feature is very different from the second dataset and no mathematical transformation can remedy this difference, for example where including the feature in a training dataset would lead to a resulting trained model having lower threat detection performance on the second dataset. The same applies for removing records where the record is very different from the second dataset. Alternatively to removing a feature or record, a mathematical transformation or weighting may be applied to the feature to reduce or increase its influence in the training dataset. The mathematical transformation applied may be determined corresponding to the classified difference (e.g. the degree of difference) between the first dataset and the second dataset, and optionally also based on the importance of the subject feature or record. For example, a feature of the first dataset known to be important for threat detection but found to be significantly different from the second dataset may have a mathematical transformation applied which reduces its influence in the training data. Removing a feature or record may have a significant impact on the performance of a threat detection model trained using the generated dataset and so applying a mathematical transformation is normally preferred.

While weighting and removal have been found to be particularly effective in the present method, it will be appreciated that other methods of domain adaptation such as data augmentation and adversarial training may also be performed on the first dataset to generate the training dataset.

The domain adaptation may be performed manually or automatically, for example by a machine learning model.

In step 420, a machine learning model is trained using the training dataset generated in step 415 to produce a trained threat detection model. The training process itself comprises any known machine learning training technique. It will be appreciated that step 415 can itself involve many iterations before a sufficiently trained model is created. Optionally, steps 410 and 415 may be repeated before the machine learning model is trained in step 420, in such examples the repeated covariate shift analysis and domain adaptation may be performed on the first dataset or the training dataset, preferably the most recent training dataset. The trained threat detection model may also be tested before steps 410 and 415 are repeated, this is particularly advantageous if the second dataset is at least partially labelled.

The training dataset is sufficiently labelled to train a threat detection model. Even when the second dataset is not labelled or not sufficiently labelled or of insufficient size to train a threat detection model, as the training dataset has been aligned with the second dataset, the trained threat detection model will effectively detect threats when applied to the second dataset or another test dataset comprising data representative of network events in the second network.

Once the model has been trained it may be stored for later use. For example, the training module 305 may store the trained model in storage medium 210 for use by log processor 205 to detect network events associated with security threats.

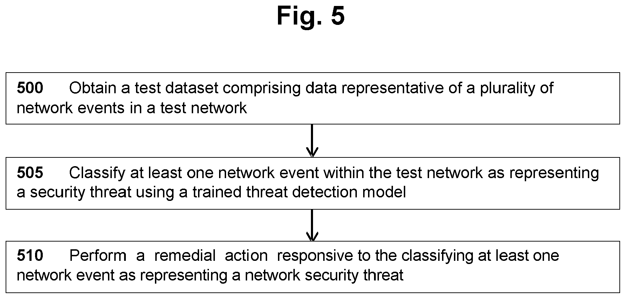

Fig. 5 sets out a method for using a trained machine learning model to identify network events that are likely to be associated with security threats.

In step 500, a test dataset is obtained. The test dataset comprises data representative of a plurality of network events in a test network.

In step 505, a trained threat detection model is used to classify at least one network event within the test network as representing a security threat, where the trained threat detection model was trained using the method of Fig. 4.

The test dataset may be the second dataset (such that the test network is also the second network), or the test dataset may be another dataset comprising data representative of a plurality of network events in the second network. As the threat detection model was trained using the method of Fig. 4, it was trained using the training dataset which has been aligned with the second dataset through covariate analysis and domain adaptation. Therefore, even though the threat detection model was not trained with a dataset representing network events in the test network, it is nonetheless able to classify network event(s) within the test network as representing a security threat.

In step 510, a remedial action is performed based on the network event(s) predicted to be associated with a security threat. The remedial action can be any of the remedial actions discussed earlier in this specification. For example, the log processor 205 may add one or more network events from the log that were identified in step 505 as predicted to be associated with a security threat to a threat report of the type discussed earlier in this specification, so as to notify a network administrator that a security threat has been detected.

By way of example, Fig. 6 shows in schematic form a data processing device 600 that is suitable for performing the functions of network event processor 110, log processor 205 and/or training model 305.

Data processing device 600 includes a processor 605 for executing instructions. Instructions may be stored in a memory 610, for example. Processor 605 may include one or more processing units (e.g., in a multi-core configuration) for executing instructions. The instructions may be executed within a variety of different operating systems on the data processing device 600, such as UNIX, LINUX, Microsoft Windows^{®}, etc. More specifically, the instructions may cause various data manipulations on data stored in memory 610 (e.g., create, read, update, and delete procedures). It should also be appreciated that upon initiation of a computer-implemented method, various instructions may be executed during initialization. Some operations may be required in order to perform one or more methods described herein, while other operations may be more general and/or specific to a particular programming language (e.g., C, C#, C++, Java, or other suitable programming languages, etc.).

Processor 605 is operatively coupled to a communication interface 615 such that data processing device 600 is capable of communicating with a remote device, such as another data processing device of system 100 (e.g. Endpoint 105a, 105b, ... , 105n).

Processor 605 may also be operatively coupled to a storage device such as storage medium 115 and/or 210 via storage interface 620. The storage device is any computer-operated hardware suitable for storing and/or retrieving data. In some cases, e.g. a remotely located storage medium, communication interface 615 may perform the function of storage interface 620 such that these two entities are combined.

The storage medium can be integrated in data processing device 600, or it can be external to data processing device 600 and located remotely. For example, data processing device 600 may include one or more hard disk drives as a storage device. Alternatively, where the storage device is external to data processing device 600, it can comprise multiple storage units such as hard disks or solid state disks in a redundant array of inexpensive disks (RAID) configuration. The storage device may include a storage area network (SAN) and/or a network attached storage (NAS) system.

Processor 605 can be operatively coupled to the storage device via a storage interface 620. Storage interface 620 is any component capable of providing processor 605 with access to the storage device. Storage interface 620 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 605 with access to the storage device.

Memory 610 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the disclosure has been described in terms of various specific embodiments, those skilled in the art will recognize that the disclosure can be practiced with modification within the spirit and scope of the claims.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof, wherein the technical effect is enabling sensitive data such a cryptogram to be distributed among secondary merchant data processing devices in a secure manner. Any such resulting program, having computer-readable code means, may be embodied or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

## Claims

1. A computer-implemented method for training a machine learning model to identify one or more network events associated with a network and representing a network security threat, the method comprising:
a) obtaining a first dataset comprising data representative of a plurality of network events in a first network;
b) obtaining a second dataset comprising data representative of a plurality of network events in a second network;
c) performing covariate shift analysis on the first dataset and the second dataset to identify and classify a plurality of differences between the first dataset and the second dataset;
d) performing domain adaptation on the first dataset, based on a classified difference, to generate a training dataset;
e) training a machine learning model using the training dataset to produce a trained threat detection model.

2. The method of any preceding claim, wherein classifying a difference between the first dataset and the second dataset comprises classifying a degree of difference.

3. The method of any preceding claim, wherein performing covariate shift analysis comprises:
concatenating the first dataset and the second dataset to generate a concatenated dataset;
applying a trained covariate shift model to the concatenated dataset, wherein the trained covariate shift model is trained to determine whether a network event in the concatenated dataset is from the first dataset or the second dataset.

4. The method of any of claims 1 to 3, wherein performing covariate shift analysis comprises:
concatenating the first dataset and the second dataset to generate a concatenated dataset;
using a covariate shift classifier, performing k-fold cross-validation on the concatenated dataset and scoring one or more of: the accuracy of the covariate shift classifier, the AUROC of the covariate shift classifier, at least one record of the concatenated dataset, or at least one feature of the concatenated dataset.

5. The method of claim 4, wherein the covariate shift classifier comprises an artificial neural network or a gradient boosted decision tree classifier.

6. The method of any preceding claim, wherein performing domain adaptation comprises one or more of the following:
removing at least one record of the first dataset;
removing at least one feature of the first dataset;
or
applying a mathematical transformation to at least one feature of the first dataset.

7. The method of any preceding claim, wherein performing domain adaptation is based on the classified difference and an importance of the classified difference for threat detection.

8. The method of any preceding claim, wherein each network event comprises at least one electronic message transmitted over the network.

9. The method of any preceding claim, wherein the network is a payment network and the one or more network events are one or more transactions carried out over the payment network.

10. The method of claim 9, wherein the network security threat is the unauthorised modification of routing information within the payment network.

11. The method of any preceding claim, wherein the threat detection model comprises at least one of: a gradient boosted decision tree, a random forest, or a support-vector machine learning model.

12. The method of any preceding claim, further comprising:
obtaining a test dataset comprising data representative of a plurality of network events in a test network; and
classifying at least one network event within the test network as representing a security threat using the trained threat detection model.

13. A computer-implemented method for identifying one or more network events associated with a network and representing a network security threat, the method comprising:
obtaining a test dataset comprising data representative of a plurality of network events in a test network;
classifying at least one network event within the test network as representing a security threat using a trained threat detection model, wherein the trained threat detection model was trained using the method of any of claims 1 to 12.

14. The method of claim 12 or 13, further comprising:
performing a remedial action responsive to the classifying at least one event as representing a network security threat, the remedial action configured to at least partially mitigate the network security threat.

15. A non-transitory computer-readable storage medium storing instructions thereon which, when executed by one or more processors, cause the one or more processors to perform the method of any preceding claim.

16. A data processing device comprising one or more processors and the non-transitory computer-readable storage medium of claim 15.
